# FASCICULE DE BREVET EUROPEEN

(11) **EP 1 120 874 B1**
(45) Date de publication et mention de la délivrance du brevet: **10.03.2010**
(21) Numéro de dépôt: 01400178.8
(22) Date de dépôt: 22.01.2001
(51) Int. Cl.: H02G 3/04

(54) **Chemin de câbles en fils à haute résistance**
Kabelrinne aus Metalldrahtgitter mit hoher Festigkeit
High strength wire cable tray

(30) Priorité: 24.01.2000 FR 0000852
(43) Date de publication de la demande: 01.08.2001
(73) Titulaire: I.C.M. Group, 21500 Montbard (FR)
(72) Inventeur: Quertelet, Stéphane, 60190 Remy (FR)
(74) Mandataire: Santarelli

(56) Documents cités:
- FR-A- 2 706 973
- US-A- 2 199 152

## Description

La présente invention concerne d'une manière générale les chemins de câbles en fils.

Ainsi qu'on le sait, ces chemins de câbles en fils comportent, sous forme maillée, des fils de deux types différents, à savoir, d'une part, des fils longitudinaux, communément appelés fils de chaîne, qui courent, longitudinalement, de manière rectiligne ou quasi rectiligne, sur toute leur longueur, et, d'autre part, établis transversalement de place en place le long de ces fils longitudinaux, en étant dûment assujettis à ceux-ci, des fils transversaux conformés en U, communément appelés fils de trame, l'ensemble formant globalement trois panneaux, en pratique plans ou sensiblement plans, à savoir, un panneau de fond et deux panneaux latéraux, communément appelés ailes.

Ces chemins de câbles en fils sont couramment utilisés pour assurer, à la manière d'une goulotte, le soutien, le logement et la protection de câbles électriques ou similaires.

Par câbles électriques, on entend ici, et dans ce qui suit, non seulement les câbles propres au transport et à la distribution de l'énergie électrique, mais aussi les câbles et fibres propres à une transmission d'information de manière électrique, optique ou autre.

A l'égard de tels câbles électriques, les chemins de câbles en fils ont de nombreux avantages qui les font apprécier des installateurs électriciens, et, notamment, des avantages de facilité de pose, et donc d'économie, de flexibilité, les câbles électriques pouvant en être sortis par l'une quelconque de leurs mailles, de transparence, et, donc, de repérage des câbles électriques, de ventilation, de propreté, de sécurité, tant pour les câbles électriques que pour les utilisateurs, et de performances.

De par leur conception, les portées de tels chemins de câbles en fils sont limitées, ainsi donc que les charges qu'ils sont amenés à supporter : dès lors, la capacité intrinsèque de la forme en goulotte n'est pas complètement utilisée, sauf à multiplier les supports et éléments de montage, au détriment du temps de montage et donc du prix de revient de l'installation ; par ailleurs, l'environnement dans lequel ils sont installés ne permet pas toujours la pose de nombreux supports.

Les panneaux latéraux comprenant une rangée longitudinale de mailles de rive successives, substantiellement rectangulaires et planes, constituant la partie supérieure des panneaux latéraux et définies chacune entre les ailes en regard de deux fils transversaux en U consécutifs et entre deux fils longitudinaux qui croisent celles-ci, sous fortes charges, ceux-ci fléchissent de manière non négligeable.

La présente invention a pour but d'éviter ces inconvénients et de proposer un chemin de câbles en fils à portée plus longue ou à capacité de chargement augmentée, comparées à celles des chemins de câbles en fils connus ; la présente invention a ainsi pour objet un chemin de câbles à haute résistance.

Le document FR-A-2 706 973 décrit un chemin de câbles du genre ci-dessus dans lequel, pour le rendre plus résistant, il est prévu, selon ce document, de fixer aux parois latérales d'une gouttière en fils des longerons latéraux de renfort qui coiffent complètement lesdites parois latérales.

Suite à de nombreux essais, la Demanderesse a constaté qu'il suffisait, pour augmenter la rigidité d'un chemin de câbles en treillis, de limiter la flexion uniquement des mailles de rive, solution plus simple et moins onéreuse que cette illustrée par le document ci-dessus.

Ainsi, selon l'invention, un chemin de câbles en fils du genre comportant, sous forme maillée, des fils de deux types différents, à savoir, d'une part, au moins un fil longitudinal, qui court longitudinalement sur toute sa longueur, et, d'autre part, établis transversalement le long de ce fil longitudinal, en étant dûment assujettis à celui-ci, des fils transversaux conformés en U, l'ensemble formant globalement, à la manière d'une goulotte, trois panneaux, à savoir un panneau de fond et deux panneaux latéraux, lesquels panneaux latéraux comprennent une rangée longitudinale de mailles de rive successives substantiellement rectangulaires et planes, constituant la partie supérieure des panneaux et définies chacune entre les ailes en regard de deux fils transversaux consécutifs, au moins une maille de rive comportant au moins un élément dit anti-flexion limitant sa flexion autour d'un axe perpendiculaire à son plan.

Selon l'invention, chaque maille de rive comportant un élément anti-flexion est constituée de deux fils longitudinaux reliés, d'une part, aux ailes en regard des deux fils transversaux et, d'autre part, entre eux par au moins une entretoise ; l'entretoise s'étend parallèlement aux ailes des fils transversaux.

Les caractéristiques et avantages de l'invention ressortiront d'ailleurs de la description qui va suivre, à titre d'exemple, en référence aux dessins schématiques annexés sur lesquels :
- la figure 1 est une vue en perspective d'un chemin de câbles en fils connu ;
- la figure 2 est une vue partielle d'un chemin de câbles en fils selon l'invention ;
- les figures 3 et 4 sont analogues à la figure 2 et correspondent chacune à une variante ;
- les figures 5 et 6 montrent partiellement une autre forme de réalisation d'un chemin de câbles en fils selon l'invention, la figure 6 étant une vue en coupe transversale par rapport à la figure 5 ;
- les figures 7 à 13 sont des vues analogues à la figure 6 et correspondent chacune à une variante.

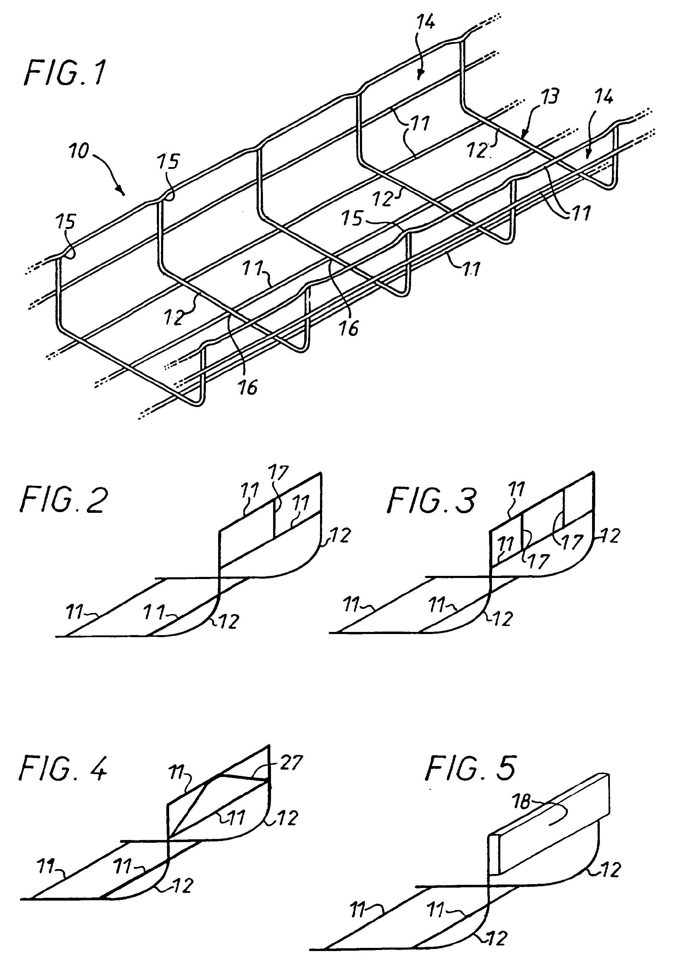

De manière connue en soi, un chemin de câbles en fils 10, tel que représenté sur la figure 1, comporte, sous forme maillée, des fils 11, 12 de deux types différents, à savoir, d'une part, des fils longitudinaux 11, qui courent, longitudinalement, de manière rectiligne ou sensiblement rectiligne, sur toute sa longueur, et, d'autre part, établis transversalement de place en place, suivant un pas régulier, le long de ces fils longitudinaux 11, en étant dûment assujettis à ceux-ci, des fils transversaux 12 conformés en U, l'ensemble formant, globalement, à la manière d'une goulotte, trois panneaux 13, 14, à savoir, un panneau de fond 13 et deux panneaux latéraux 14.

En pratique, les fils 11, 12 sont des fils métalliques, et, plus précisément, des fils en acier, et, à leur croisement 16, ils sont assujettis les uns aux autres par soudage.

Par construction, les fils 11, 12 se croisent à des niveaux différents.

En pratique, les fils longitudinaux 11 sont à un niveau inférieur et dits fils inférieurs, et les fils transversaux 12 à un niveau supérieur et dits fils supérieurs.

Autrement dit, les fils longitudinaux 11 s'étendent à l'extérieur des fils transversaux 12 ; mais, bien entendu il pourrait en être autrement, les fils transversaux 12 s'étendant alors à l'extérieur des fils longitudinaux 11.

Dans la forme de réalisation représentée, tous ces fils 11, 12 sont des fils ronds ; autrement dit, ils ont tous une section transversale circulaire ; mais d'autres formes de section sont possibles : carrée, rectangulaire, ronde à méplats, polygonale ou autre ; la notion de diamètre au sens de la présente demande recouvre celle de largeur ou d'épaisseur du fil selon la forme de sa section.

Par exemple, et tel que représenté, le diamètre de celle-ci est le même pour tous, mais il n'en est pas nécessairement toujours ainsi.

Dans la forme de réalisation représentée, le panneau de fond 13 comporte trois fils longitudinaux 11 et, à chaque pas, ces fils longitudinaux 11 délimitent, avec les fils transversaux 12 correspondants, une maille.

Mais, comme précédemment, le nombre de fils longitudinaux 11 que comporte ce panneau de fond 13, et, donc, le nombre de mailles qu'ils forment à chaque pas, peuvent être différents ; en particulier, ce panneau de fond 13 ne pourrait comporter, dans une variante non représentée, qu'un fil longitudinal 11.

Dans la forme de réalisation représentée, chacun des panneaux latéraux 14 ne comporte que deux fils longitudinaux 11, à savoir, un fil longitudinal 11 intermédiaire, qui intervient sensiblement à mi-hauteur, et un fil longitudinal 11 de rive. Mais, comme précédemment, ce nombre de fils longitudinaux 11 peut être différent.

En particulier, les panneaux latéraux 14 peuvent, à la manière du panneau de fond 13, former des mailles, de même extension que les mailles de ce panneau de fond 13 ou d'extension différente.

Dans la forme de réalisation représentée, le fil longitudinal 11 de rive des panneaux latéraux 14 comporte, de place en place, suivant le pas, des ondulations 15 à la faveur desquelles il est abouté aux fils transversaux 12, mais il n'en est pas nécessairement toujours de même.

Ainsi, ici, les panneaux latéraux 14 comprennent en bordure supérieure une rangée longitudinale de mailles dites de rive successives, substantiellement rectangulaires et planes, définies chacune entre les ailes en regard de deux fils transversaux 12 en U consécutifs et entre deux fils longitudinaux 11 qui croisent lesdites ailes.

Selon l'invention, comme montré sur la figure 2, au moins l'une desdites mailles de rive est rigidifiée pour limiter sa flexion autour d'un axe perpendiculaire à son plan, en sorte que la portée du chemin de câbles en fils est augmentée.

Une telle maille de rive, dite rigide, comprend donc un élément dit anti-flexion constitué, selon cette forme de réalisation, par une entretoise 17 en fil reliant, ici par soudage, les deux fils longitudinaux 11 définissant la maille.

Selon l'exemple de la figure 2, il y a une seule entretoise 17 disposée parallèlement aux ailes des fils transversaux 12, pratiquement au milieu de la maille ; bien entendu, plusieurs entretoises telles que l'entretoise 17 peuvent être prévues ; la figure 3 montre par exemple une maille de rive rigide ayant deux telles entretoises.

Selon une variante non représentée, une ou plusieurs entretoises en fil sont disposées de manière inclinée par rapport aux ailes des fils transversaux 12.

La figure 4 montre un élément anti-flexion constitué par une entretoise 27 en fil en forme de U ouvert dont l'âme est, ici, solidarisée par soudage sous le fil longitudinal supérieur 11 de la maille ; l'extrémité des bras du U est reliée à l'autre fil longitudinal 11, ou mieux, comme représenté, à l'intersection dudit fil longitudinal 11 et des ailes des fils transversaux 12.

Selon une variante non représentée, une telle entretoise 27 appartient à un fil continu alternativement relié aux fils longitudinaux 11 communs aux mailles successives disposées de part et d'autre de la maille de la figure ; bien entendu, la conformation du fil continu peut avoir diverses formes : trapézoïdale, sinusoïdale, en ligne brisée, ou autre.

Dans les variantes qui suivent, figures 5 à 13, l'élément anti-flexion est en forme de profilé, par exemple métallique, qui constitue en quelque sorte la maille de rive rigide elle-même ; dans les exemples représentés, les profilés sont en tôle rapportés par soudage sur les ailes des fils transversaux 12 ; la tôle peut être non perforée ou perforée ; comme on le voit, ici, la maille ne comporte pas de fils longitudinaux.

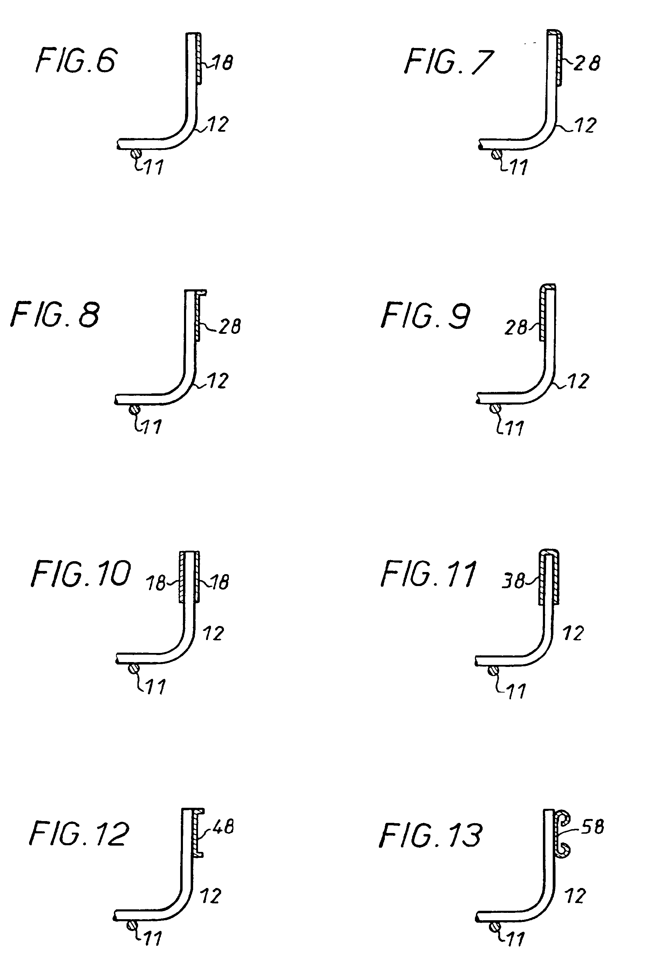

Selon les figures 5 et 6, le profilé 18 est plan et assujetti à l'extérieur du chemin de câbles ; en variante, il est disposé à l'intérieur de celui-ci ; selon la figure 10, deux tels profilés 18 sont prévus, un à l'intérieur et l'autre à l'extérieur du chemin de câbles.

Selon la figure 7, le profilé 28 a une section en forme de L en sorte qu'il est muni d'un court rebord longitudinal ; avantageusement, la hauteur de ce rebord est égale au diamètre du fil transversal 12 et coiffe l'extrémité libre des ailes du fil transversal 12, que ce profilé 28 soit disposé à l'extérieur du chemin de câbles, comme représenté sur cette figure , ou à l'intérieur, figure 9.

Bien entendu, le profilé 28 peut être disposé en sorte que son rebord soit dirigé vers l'extérieur du chemin de câbles, figure 8.

Selon la figure 11, le profilé 38 a une section en forme de U à grandes ailes et chevauche les ailes des fils transversaux 12 ; la dimension intérieure de la base du U du profilé 38 est égale au diamètre du fil transversal 12.

Selon la figure 12, le profilé 48 a une section en forme de U à petites ailes et est assujetti à l'extérieur du chemin de câbles, ses petites ailes étant dirigées vers l'extérieur.

Le profilé 58 de la figure 13 est analogue au profilé 48 de la figure 12 mais ici les ailes du profilé 58 sont à bord roulé vers l'intérieur du U du profilé.

De nombreux essais ont montré que les performances d'un chemin de câbles en fils selon l'invention, en matière de flèche et de charge, sont améliorées d'au moins 15%, se traduisant par un gain sur la portée entre deux supports d'appui consécutifs.

## Revendications

1. Chemin de câbles (10) en fils du genre comportant, sous forme maillée, des fils (11, 12) de deux types différents, à savoir, d'une part, au moins un fil longitudinal (11), qui court longitudinalement sur toute sa longueur, et, d'autre part, établis transversalement le long de ce fil longitudinal (11), en étant dûment assujettis à celui-ci, des fils transversaux (12) conformés en U, l'ensemble (10) formant globalement, à la manière d'une goulotte, trois panneaux (13,14), à savoir un panneau de fond (13) et deux panneaux latéraux (14), lesquels panneaux latéraux (14) comprennent une rangée longitudinale de mailles de rive successives substantiellement rectangulaires et planes, constituant la partie supérieure des panneaux latéraux (14) et définies chacune entre les ailes en regard de deux fils transversaux (12) consécutifs, au moins une maille de rive comportant au moins un élément dit anti-flexion (17) limitant sa flexion autour d'un axe perpendiculaire à son plan, **caractérisé par le fait que** chaque maille de rive comportant un élément amti-flexion est constituée de deux fils longitudinaux (11) reliés, d'une part, aux ailes en regard des deux fils transversaux (12) et, d'autre part, entre eux par au moins une entretoise (17) formant un élément anti-flexion, l'entretoise (17) s'étendant parallèlement aux ailes des fils transversaux (12).

## Claims

1. Wire cable duct (10) comprising a grid made up of wires (11,12) of two different types, namely at least one longitudinal wire (11) which runs longitudinally the entire length of the duct and U-shaped transverse wires (12) disposed transversely along the longitudinal wire (11) and appropriately attached thereto, the resulting trough-like combination forming three panels (13,14), namely a bottom panel (13) and two side panels (14), which side panels (14) comprise a longitudinal row of successive plane and substantially rectangular edge meshes which constitute the upper part of the side panels (14), each of which is defined between two facing flange portions of two consecutive transverse wires (12), and each of which includes at least one anti-flexing member (17) adapted to limit its flexing about an axis perpendicular to its plane, **characterised in that** each edge mesh including an anti-flexing member comprises two longitudinal wires (11) joined to facing flange portions of two transverse wires (12) and to each other by at least one crossmember (17) forming an anti-flexing member, the crossmember (17) being parallel to the flange portions of the transverse wires (12).

## Patentansprüche

1. Kabelrinne (10) aus Draht mit Drahtmaschen (11, 12) aus zwei verschiedenen Drahtsorten, einerseits mindestens einem Längsdraht (11), der sich über seine gesamte Länge longitudinal erstreckt und andererseits U-förmige Querdrähte (12), die sich transversal entlang des Längsdrahtes (11) erstrecken und am Längsdraht (11) befestigt sind, wobei die Gesamtheit (10) der Drähte insgesamt nach Art einer Rinne drei Körbe (13, 14) bildet, einen Bodenkorb (13) und zwei seitliche Körbe (14), wobei die seitlichen Körbe (14) eine sich längs erstreckende Reihe von aufeinanderfolgenden im Wesentlichen rechteckigen und ebenen Randmaschen aufweisen, die den oberen Bereich der seitliche Körbe (14) bilden und die jede untereinander zwischen den Flügeln gegenüber zwei aufeinanderfolgender Querdrähte (12) mindestens eine Randmasche bilden, die mindestens ein Antiflexionselement (17) aufweisen, die ein Verbiegen um eine zu ihrer Ebene senkrechten Achse begrenzen,
**dadurch gekennzeichnet, dass** jede Randmasche, die ein Antiflexionselement aufweist aus zwei Längsdrähten (11) besteht, die einerseits mit Maschen gegenüber zweier Querdrähte (12) verbunden sind und andererseits untereinander durch mindestens einen Quersteg (17), der ein Antiflexionselement darstellt, wobei der Zwischensteg (17) sich parallel zu den Flügeln der Querdrähte (12) erstreckt.
